# EUROPEAN PATENT SPECIFICATION

(11) **EP 4 355 552 B1**
(45) Date of publication and mention of the grant of the patent: **06.08.2025**
(21) Application number: 22737944.3
(22) Date of filing: 17.06.2022
(51) Int. Cl.: B29C 63/04, B29C 63/06, B29D 23/00

(54) **MANUFACTURE OF PIPELINES**
HERSTELLUNG VON ROHRLEITUNGEN
FABRICATION DE PIPELINES

(30) Priority: 18.06.2021 GB 202108791
(43) Date of publication of application: 24.04.2024
(73) Proprietor: Subsea 7 Limited, Sutton, Surrey SM2 5BN (GB)
(72) Inventor: MACGREGOR, Gordon, Wick, Caithness KW1 4XG (GB)
(74) Representative: Keltie LLP
(86) International application number: PCT/GB2022/051562
(87) International publication number: WO 2022/263867

(56) References cited:
- EP-A2- 0 374 583
- WO-A1-2021/044366
- GB-A- 1 210 779
- US-A- 4 443 277
- US-A- 4 920 234
- US-A1- 2015 378 120

## Description

This invention relates to the manufacture of pipelines and in particular to the challenges of installing cables on a pipeline, such as those used in trace heating systems.

In this specification, references to pipelines include pipe stalks that are fabricated from a succession of pipe joints and that are then welded together, in turn, to form longer pipelines. References to pipelines herein also include pipeline bundles in which parallel pipes and other elongate elements such as cables are bundled together within a carrier pipe or supported around a central spine pipe. For example, pipe stalks of up to a few kilometres in length may be manufactured at a coastal spool base and assembled there into pipeline bundles.

Pipelines may, for example, be used underwater as 'tie-backs' to transport crude oil and/or natural gas from a subsea wellhead across the seabed on the way to the surface, typically via a riser. Specifically, on production of hydrocarbons from a subsea well, the produced fluid emerges from the wellhead at high temperature and pressure and then enters a subsea pipeline. During subsequent transportation along the pipeline, the temperature and pressure of the produced fluid have to be kept high enough to ensure a sufficient flow rate across the seabed and up the riser. Thus, various measures are taken to ensure that the internal temperature of the pipeline remains high despite thermal exchange with the much colder surrounding seawater.

Designers of subsea pipelines have adopted both active and passive approaches to thermal management, either individually or in combination. Active thermal management systems add heat to the pipeline whereas passive thermal management systems employ thermal insulation to retain heat in fluids carried by the pipeline.

As an example of active thermal management, a trace heating system typically employs resistive electrical cables running along, and in thermal contact with, the outer surface of a steel pipeline. Heat produced by passing an electric current along the cables is conducted through the pipe wall to the production fluid flowing within.

The cables may extend in straight lines parallel to the central longitudinal axis of the pipeline, in a wavy pattern such as an S/Z pattern that extends both circumferentially and longitudinally, or in a helical pattern spiralling around the longitudinal axis. Helical configurations are apt to be used where the pipeline will have substantial curvature along its length during installation and in use, so that the cables will not sag at the intrados of a curve or, conversely, be overstretched at the extrados of a curve. However, where the pipeline will remain relatively straight during installation and in use, such as in a towed pipeline bundle, straight or wavy cables may be easier and quicker to install and are cheaper than helical alternatives, not least because they reduce the overall length of cable required.

Pipe-in-pipe (PiP) structures comprising a fluid-carrying inner pipe positioned concentrically within an outer pipe are widely used as pipelines in the subsea oil and gas industry. A PiP structure is an example of passive thermal management as the inner and outer pipes are spaced from each other to define a thermally insulating annulus between them. Typically, thermally insulating material is disposed in the annulus; it is also possible to draw down a partial vacuum in the annulus or to inject an insulating gas to reduce transmission of heat through the annulus.

Electrically trace-heated PiP employs a combination of active and passive thermal management to manage the temperature of production fluids optimally. In particular, resistive electrical cables are disposed within the annulus between the inner and outer pipes, in thermal contact with the inner pipe. Typically, the cables are buried beneath, or radially within, layers or blankets of thermal insulation material also disposed in the annulus and pass through or beneath structures such as bulkheads, anodes or spacers that extend radially across the annulus.

Auxiliary cables may also be installed along a pipeline to carry data for communication, control or monitoring purposes, or to convey electrical power along the pipeline. In PiP structures, such cables are conveniently also accommodated in the annulus. An example of such an auxiliary cable is a fibre-optic cable.

Machines for laying cables on pipelines are bulky and expensive and are slow to set up and to operate. For example, a known machine that lays cables helically around a pipe for reel-lay installation is large, expensive and requires a separate facility to operate. This also requires an offline cable-laying installation method in which outer and inner pipes are produced separately, followed by cable attachment and sheathing operations. Also, a machine adapted for laying in a helical configuration is not appropriate for laying cables in straight or wavy configurations.

Another issue is that the process of installing cables along a pipeline imparts strain in the cables and so could introduce or exacerbate defects or faults as the cables are bent along their length or stretched longitudinally before being fixed to the pipeline. Any such faults may be difficult to locate and disruptive to fix, especially after the cables have been buried under insulation material or advanced into an outer pipe of a PiP assembly.

A crawler as described in WO 2018/060851 can roll along a pipeline while laying a straight cable on the pipeline but it is not suitable for laying more than one cable at a time. A crawler of that type would make laying of multiple cables extremely slow and would not be suitable for continuous manufacture of long pipelines or PiP structures.

Machines for laying cables on pipelines have typically been adapted from machines for manufacturing cables, flexible pipelines or umbilicals. Examples of such machines are shown in WO 2018/091814 and US 8919092. A simplified example is shown schematically in Figure 1 of the drawings.

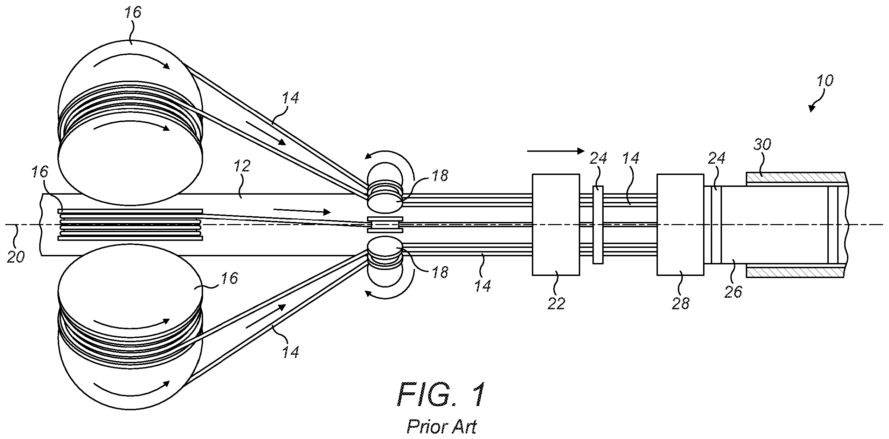

Specifically, Figure 1 shows part of a prior art pipeline manufacturing facility 10, such as a coastal spoolbase, in which a pipe 12 advances from left to right as shown. The pipe 12 is typically fabricated by welding together a succession of steel pipe joints at an upstream location within the facility 10, not shown. When the pipe 12 reaches the stage of manufacture shown in Figure 1, heating cables 14 are unspooled from respective reels 16 and guided by respective guides 18 onto the outer surface of the pipe 12. There, the cables 14 may be fixed in place by circumferential straps or other conventional fixings, not shown.

For simplicity of illustration, the cables 14 are equi-angularly spaced about the central longitudinal axis 20 of the pipe 12 in this example and extend parallel to that axis 20 and to each other. As noted above, however, the cables 14 could follow helical or wavy paths instead. Also, for simplicity, only eight cables 14 are shown here, three of which are hidden behind the pipe 12, but in practice there can be several more cables 14 so that the angular spacing between neighbouring cables 14 is substantially less than that shown. For example, thirty to thirty-six cables 14 could be distributed around the circumference of the pipe 12.

Downstream of the guides 18 where the cables 14 are brought into contact with or applied to the pipe 12, the pipe 12 undergoes at least one further process. In Figure 1, a first such process is represented by a first work station 22 that adds spacers 24 before insulation material 26 is placed between the spacers 24 on top of the cables 14 at a second work station 28 downstream of the first work station 22.

Finally, in this example, the pipe 12 becomes the inner pipe of a PiP assembly on being inserted telescopically into an outer pipe 30 of the assembly. The outer pipe 30 may, for example, be more than 1.5km long as part of a pipe stalk that will form part of a reel-laid pipeline or part of a pipeline bundle.

In Figure 1 and other drawings, motion is shown schematically in one direction. However, at least part of the cable-laying apparatus could move back and forth longitudinally.

US 2015/378120 discloses a system and method for producing a pipe-conforming structure in which fibre-optic cables and/or other types of cables are embedded. The structure has a convex lens-like cross section and is attached to the external surface of the manufactured pipeline. The structure is manufactured by a pultrusion process, which limits the cables to being laid substantially straight and parallel to the longitudinal axis of the pipe. The disclosure also teaches that the structure can extend around only about 30° to 180° of the circumference of the pipe. This means that the structure is not apt to support an array of heating elements extending around most or all of the circumference of the pipe, or that two or more such structures would be needed for that purpose.

WO 2021/044366 discloses a multi-layer pipe with an embedded conductor running along its length. The purpose of the conductor is to transmit power and/or electrical signals to devices such as valves in a system such as an air conditioning system in a building. This disclosure teaches adhering the conductors to an adhesive layer before covering them in an outer layer of the pipe. If this approach were to be scaled up for use in trace heated pipelines, the user would face the same issues as if starting from the known reel lay machines that are bulky and expensive.

It is against this background that the invention has been devised. In one sense, the invention resides in a method of attaching a plurality of cables to an elongate pipeline. The method comprises bringing together the pipeline and an elongate mat along a common longitudinal direction, for example by converging the mat with the pipeline from above the pipeline. The mat comprises at least two longitudinally-extending cables that are supported by a pliant substrate, such that wrapping the mat around at least a majority of the circumference of the pipeline positions the cables at respective angular positions about a longitudinal axis of the pipeline. The wrapped mat is then fixed to the pipeline, for example using at least one circumferential band, strap or layer. Subsequently, the pipeline and the wrapped mat are inserted together into an outer pipe.

Elegantly, the actions of bringing together the pipeline and the mat and wrapping the mat around the pipeline may be performed simultaneously and continuously.

Centraliser spacers and/or thermal insulation may be added around the wrapped mat upstream of the outer pipe. Such spacers may conveniently be aligned with cut-outs in the mat to effect direct contact between the spacers and the pipeline through the cut-outs. Such spacers may also have recesses on an inner side for accommodating the cables.

Preferably, the mat is stored on and unspooled from a reel, in which case a portion of the mat unspooled from the reel is advanced from the reel toward the pipeline. The unspooled portion of the mat may be guided or funnelled from a planar profile on exiting the reel into a profile that is curved about the longitudinal axis of the pipeline.

Relative longitudinal movement may be effected between the pipeline and an axis of rotation of the reel. For example, the axis of rotation could move longitudinally as the pipeline remains static; or the axis of rotation could remain static as the pipeline moves longitudinally.

The wrapped mat may be fixed to the pipeline by inter-engaging complementary fastenings carried by the mat. For example, such fastenings could be disposed along opposed longitudinal edges of the substrate to inter-engage when those edges overlap, abut or otherwise face each other upon wrapping the mat around the pipeline.

The inventive concept also embraces a pipeline wrapped by at least one mat of the invention extending around at least a majority of its circumference.. The cables may be disposed on an inner or outer side of the substrate with respect to the pipeline. The pipeline may further comprise centraliser spacers surrounding the mat and the pipeline. In that case, the spacers may be aligned with respective columns of apertures in the substrate. Where each spacer has recesses on an inner side that accommodate the cables, the recesses may be disposed between the apertures.

The invention greatly simplifies the cable laying apparatus and the cable lay process of the prior art. The invention also makes the cable lay process quicker and easier to manage than in the prior art while improving the reliability of the laid cables.

The invention is particularly useful where multiple cables are to be laid longitudinally along the pipeline. The cables can extend parallel to the central longitudinal axis of the pipeline in straight lines or may undulate in a sinuous or wavy configuration while still extending generally longitudinally, for example in the manner of a waveform.

In applications where it is practical for the cables to extend longitudinally, the invention has even greater benefits when compared with the significant and unjustified additional expense and complication of helical winding. For example, due to the relatively low bending stresses experienced during launching, towing and final installation of pipeline bundles, cables used in that application may not have to be helically wound and can instead be laid in a straight or wavy configuration along the outer surface of an inner flowline pipe. This is different to the cable arrangements that are employed in most examples of electrically heated pipe intended for reel-lay.

In embodiments to be described, the invention uses a specifically-manufactured mesh cable mat to manufacture electrically heat traced flowline (EHTF) for use in a pipeline bundle or PiP system. The mat, serving as a supporting substrate for the cables, is wrapped around an inner pipe before being pulled with the inner pipe into a sleeve or outer pipe. The cables can thereby be laid, secured and insulated before being pulled into an outer pipe in a single or stepwise operation.

Whilst WO 2011/073669 to the Applicant teaches wrapping a plastic planar member around a cable for protection, it does not teach the use of such a member to install the cable on a pipeline.

The mat is wrapped around at least a majority of the circumference of a pipe such that the longitudinal edges of the mat may overlap, abut or face each other. Those edges may be parallel to the central longitudinal axis of the pipe.

Once wrapped in this way, the mat may be secured to the pipe, for example by being taped around the pipe to hold the mat and hence the cables in place. An option would be to use a high-temperature tape or hook-and-loop material as a strap that wraps circumferentially around the pipe and the mat and that is tensioned to hold the mat and the supported cables in place. Such straps could be incorporated into the mat to allow for easier application of the mat.

Additionally, or alternatively, longitudinal edges or edge regions of the mat may be secured to each other to keep the mat in circumferential tension around the pipe. For instance, longitudinal strips of high-temperature hook-and-loop material could be provided to join together overlapping longitudinal edges of a mat when wrapped around a pipe. Examples of such material include 3M^{™} High Temperature Hook and Loop, 85°C and Velcro^{™} Duragrip^{™}, 115°C.

The mats to be described are also designed for the incorporation of centraliser spacers into the annulus of the PiP assembly, with gaps or openings cut into the mat to allow the spacers to be attached to the pipe. In this respect, pre-attaching the cables to mats ensures a straight lay with the correct circumferential spacings for spacer installation. The spacers allow the cable-carrying mat to stay in place while guiding the inner pipe into and along the outer pipe. The spacers may also serve to secure the mat to the pipe. If a spacer needs to be moved, for example at a weld bead, then new gaps can be cut in the mat to allow repositioning.

More specifically, parallel longitudinal groups or banks of cables are laid along the length of the mat and gaps in the mat between the banks allow for installation of suitable spacers directly onto the underlying flowline pipe. The gaps are mutually spaced in the widthwise direction of the mat, hence in a circumferential direction when the mat has been wrapped around the pipe. The spacers may have notched, circumferentially-discontinuous inner surfaces for this purpose, defining projections that extend radially inwardly into respective gaps to contact the outer surface of the underlying pipe.

The gaps are also mutually spaced in the lengthwise direction of the mat, hence in an axial or longitudinal direction when the mat has been wrapped around the pipe. The longitudinal spacing between the gaps matches the desired longitudinal spacing between successive spacers in the PiP assembly.

Once the mat has been applied to the pipe and the cable assembly is secure, thermal insulation may be placed over or around the cables, for example between successive spacers where such spacers are employed.

Simultaneous installation of multiple cables on a mat paid out from a reel as contemplated by the invention is much simpler than prior art cable-laying methods. For example, the invention allows the process to be incorporated easily into the welding/manufacturing firing line rather than as a separate process performed in a separate building. The invention therefore offers much lower costs than the prior art, expressed as both capital expenditure (CAPEX) and operational expenditure (OPEX), and saves substantial schedule time.

Cables may, for example, be glued, bonded or welded onto a mat or embedded into a mat. The width of the mat may be tailored specifically to suit the outer diameter of the flowline pipe, for example by matching the width of the mat to the circumference of the pipe. Some extra width may be allowed for overlap of the longitudinal edges of the mat if required. Conversely, the width of the mat may be slightly less than the full circumference of the pipe such that the longitudinal edges of the mat face each other.

The completed cable mat may be coiled or spooled and is suitably delivered to site on a reel. Depending upon reel storage, the mat could be made in a length that is sufficient to cover an entire bundle train or could be cut to length. Two or more such mats could be applied to the pipe in longitudinal succession.

One or more lay guides may be employed to guide the mat from the reel and then to wrap the mat around the pipe. Such guides could have smooth inner faces to allow the mat to glide past them while being formed around the pipe to be secured in place once fully wrapped. Advantageously, substantially uniform thickness of the elongate pliant substrate facilitates deflection or bending of the mat from a planar profile to a circular profile.

For example, a series of longitudinally-spaced forming guides could be employed between the reel and the pipe touchdown area to guide the mat around the pipe when being pulled forward as the pipe advances. The successive guides shape the mat progressively from flat storage on the reel to a circular cross-section that fits snugly around the pipe. Such forming guides could be horseshoe-shaped in end view with increasing curvature, in other words a decreasing radius of curvature, from one guide to the next in the downstream direction.

Embodiments of the invention implement a method for laying at least two cables along an elongate structure, the method comprising: preliminarily mounting the cables on a longitudinally elongate pliant planar mat; longitudinally laying the mat on the elongate structure and wrapping the mat around at least a majority of the circumference of the elongate structure; and locking the mat in position.

The cables may comprise trace heating cables and/or at least one fibre optic cable.

The elongate structure may be a pipeline such as a rigid pipeline or a pipeline to be inserted into the carrier pipe of a bundle. Such a pipeline or bundle may be configured for offshore installation.

Preliminarily, the mat may be spooled on a reel, in which case laying the mat may comprise unspooling the reel while guiding the mat onto the structure to wrap the mat around at least a majority of the structure. The steps or actions of laying and wrapping the mat may be performed simultaneously.

Conveniently, laying and wrapping the mat may be facilitated by guide elements, which may conveniently be arranged above the path of the pipe or other structure. The guide elements may, for example, be static and can define a funnel that tapers in a downstream direction. Alternatively, the guide elements could be mobile jaws or rollers such as diabolo-shaped rollers with an hourglass profile.

The mat may, for example, be a net or a mesh or other strip or web, which may be continuous or foraminous. In one example, the mat is a polymer fabric support. The mat may have pre-defined holes or apertures for clamping further accessories or components around the cables and/or the structure.

Locking the mat may, for example, be achieved by using clamps and/or straps. Clamps may serve as spacers or centralisers and may comprise at least two part-clamp or half-clamp portions. Centralisers may comprise slots or cut-outs to accommodate the cables and may be clamped on the pipeline at the locations of the aforementioned holes or apertures in the mat. Alternatively, the mat could be locked in position by rolling or extruding a sheet, sleeve or layer around the mat. Such a sheet or sleeve may be metallic, for example of steel or aluminium, or polymeric.

The cables may lie along the longitudinal direction of the mat and may be straight or may oscillate in shape along the mat, for example in a sinusoidal shape.

The reel may turn about an axis that remains static as the pipeline moves longitudinally while laying the mat. Alternatively, the axis of the reel could move longitudinally along the pipeline as the pipeline remains static.

In summary, the invention contemplates an improved method of attaching a plurality of cables such as trace heating cables to an elongate pipeline. The method comprises bringing together the pipeline and an elongate mat along a common longitudinal direction, wrapping the mat around a majority of the circumference of the pipeline, and fixing the wrapped mat to the pipeline. The mat comprises at least two longitudinally-extending cables that are supported by a pliant substrate so that when the mat is wrapped around the pipeline, the cables are positioned at respective angular positions about a longitudinal axis of the pipeline.

The mat may be guided from a planar configuration on exiting a reel into a configuration that is curved about the longitudinal axis. Centraliser spacers and thermal insulation may be added around the pipeline and the wrapped mat before the assembly is inserted into an outer pipe.

To put the invention into context, reference has already been made to Figure 1 of the accompanying drawings, which is a schematic plan view of a pipeline manufacturing facility at which heating cables are fixed to a pipeline. In order that the invention may be more readily understood, reference will now be made, by way of example, to the remainder of the drawings in which:
Figure 2 is a schematic plan view of a mat of the invention carrying an array of heating cables;
Figure 3 is a schematic plan view of a pipeline manufacturing facility at which a cable-carrying mat of Figure 2 is wrapped around a pipeline;
Figure 4 is a side view of the facility shown in Figure 3;
Figure 5 is a cross-sectional view of the mat of Figure 2 wrapped around an inner pipe and secured to the pipe by a two-part circumferential clamp;
Figure 6 is a plan view of a variant of a cable-carrying mat of the invention; and
Figure 7 is a plan view of a further variant of a cable-carrying mat of the invention.

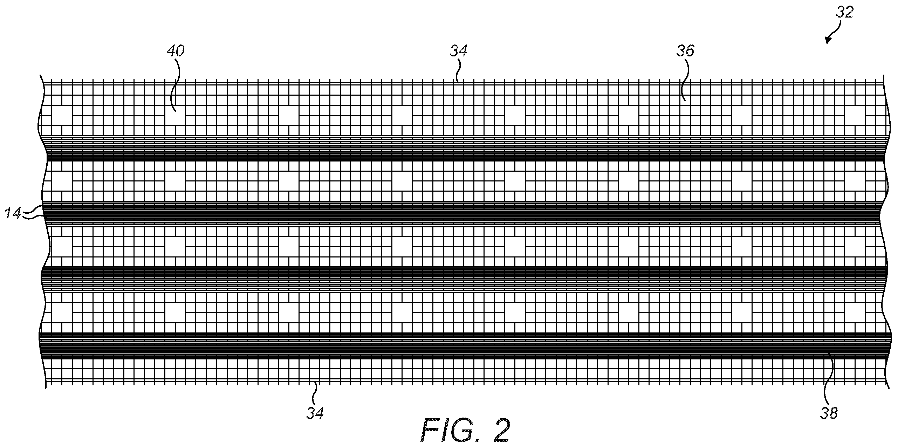

Turning next, then, to Figure 2 of the drawings, this shows a portion of a cable-carrying mat 32 of the invention in plan view. The mat 32 is of indeterminate length in a longitudinal direction from left to right as shown. Conversely, the mat 32 has a constant, fixed width defined between parallel longitudinal edges 34 in a widthwise direction from top to bottom as shown.

The mat 32 comprises a flexible substrate 36 of substantially uniform thickness across its width. This allows the mat 32 to be wrapped easily around at least a majority of the circumference of a pipeline and to be unspooled easily from a reel. In this example, the substrate 36 comprises a mesh or open-weave fabric of orthogonally-intersecting filaments, which may be of a textile or polymer material. The substrate 36 may be of drapeable flexibility to bend under its own weight or may require forming into a curved shape.

The substrate 36 carries an array of heating cables 14 that all extend in the longitudinal direction. In this example, the cables 14 are straight and parallel although they could instead be wavy while still extending longitudinally when viewed on a larger scale, for example by undulating sinuously about a longitudinal neutral axis.

The cables 14 shown here are grouped in four parallel bands or sets 38, which are together offset on the mat 32 in the widthwise direction. Each set 38 contains the same number of cables 14.

The sets 38 are spaced apart from each other in the widthwise direction such that when the mat 32 is wrapped around a pipe, the sets 38 will be spaced equiangularly around the pipe. Thus, if the spacing between adjacent sets 38 is s, and the width of each set 38 is w, the sum of *s+w* is, nominally, a quarter of the circumference of the pipe.

Optionally as shown, arrays of longitudinally-spaced apertures 40 penetrate the substrate 36, defining longitudinal series or rows of gaps disposed between and beside the sets 38 of cables 14. The apertures 40 of each row align longitudinally with counterpart apertures 40 of the other rows, forming columns. The counterpart apertures 40, thus aligned in columns, are mutually spaced across the mat 32 in the widthwise direction, hence extending circumferentially when the mat 32 is eventually wrapped around a longitudinally-extending pipe.

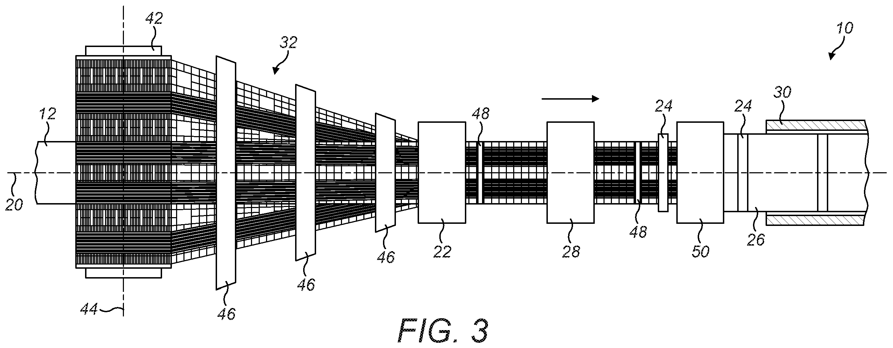

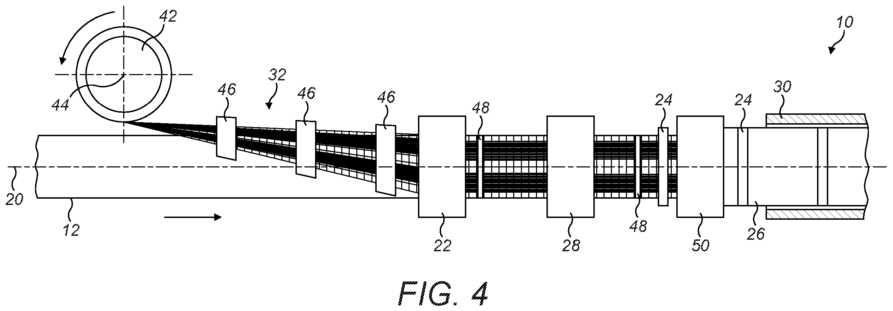

In this respect, reference is now made to Figures 3 and 4, which are counterparts of Figure 1 in which like numerals are used for like features. Here, a mat 32 is shown being wrapped around the circumference of a pipe 12 in a pipeline manufacturing facility 10, the mat 32 thus carrying the sets 38 of cables 14 onto the pipe 12 simultaneously to define circumferentially-spaced longitudinal arrays of cables 14.

The mat 32 is delivered to the facility 10 spooled on a reel 42. During a manufacturing operation as the pipe 12 is advanced through the facility 10, the reel 42 turns about an axis of rotation 44 in a plane that is orthogonal to the central longitudinal axis 20 of the pipe 12. The reel 42 is symmetrical about a vertical plane that contains the axis 20 of the pipe 12.

Conveniently, the axes 20 and 44 are both horizontal and the axis 44 of the reel 42 is above the axis 20 of the pipe 12, so that an unspooled portion of the mat 32 advancing in a downstream direction approaches the pipe 12 from above before progressively uniting with the pipe 12 in a touchdown zone. There, the mat 32 is curved to an increasing degree about a longitudinal axis until it surrounds, envelops or enfolds the pipe 12, finally adopting circular-section curvature that complements the exterior of the pipe 12.

A guide arrangement disposed between the reel 42 and the touchdown zone comprises a series of longitudinally-spaced forming guides 46 past which the mat 32 slides in the downstream direction. The guides 46 lie in respective transverse planes and have concave undersides that are curved about respective longitudinal axes, with successively decreasing radii of curvature.

Thus, the undersides of the guides 46 lie, virtually, on a common approximately conical funnel surface that tapers in the downstream direction and that is curved around, or has an axis convergent with, the central longitudinal axis 20 of the pipe 12. The successive guides 46 thereby impart progressively-increasing curvature to the unspooling mat 32, from a planar configuration on leaving the reel 42 to a circular cross-section on being wrapped fully around the pipe 12 at the downstream end of the touchdown zone. The guides 46 can comprise gutters, plates, rollers, jaws or any other guide means known in the art, and can be static or movable.

The substrate 36 of the mat 32 supports the cables 14 continuously during the simultaneous laying process. In doing so, the substrate not only keeps the cables 14 in the correct positional relationship to each other and to the pipe 12 but also protects the cables 14 against damage caused by excessive stress. Also, simultaneous movement of all of the cables 14 can be controlled simply by controlling the position, speed and shape of the substrate 36.

Once wrapped fully around the pipe 12, the mat 32 is fixed in place by circumferential straps applied at a first work station 22 at the touchdown zone. The mat 32 could instead be fixed in place by an outer wrap or layer applied at the first work station 22, for example by extrusion. Spacers 24 are added at a second work station 28 before insulation material 26 is placed on top of the mat 32 between the spacers 24 at a third work station 50. Finally, again, the pipe 12 becomes the inner pipe of a PiP assembly on being inserted telescopically into an outer pipe 30 of the assembly.

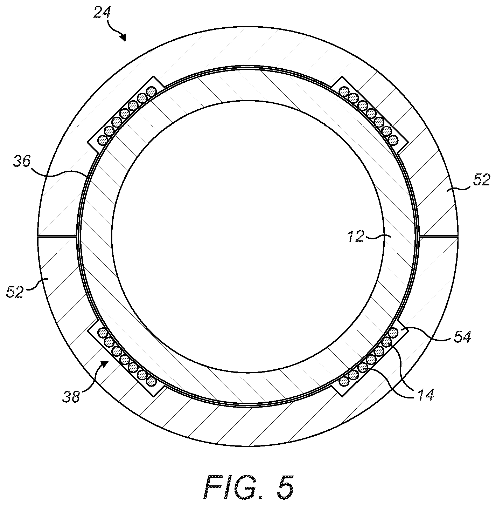

Turning next to Figure 5, this cross-sectional view shows one of the spacers 24 mounted around the pipe 12 with the substrate 36 of the mat 32 sandwiched between the spacer 24 and the pipe 12. In this example, the spacer 24 comprises two semicircular half-clamp portions 52 that are assembled together at the second work station 28 shown in Figures 3 and 4. The half-clamp portions 52 are assembled in mutual opposition about the pipe 12 and hence about the mat 32 that was wrapped around the pipe 12 and secured to the pipe 12 at the first work station 22 shown in Figures 3 and 4.

In the example shown in Figure 5, the inner side of the spacer 24 defined by the concave faces of the half-clamp portions 52 comprises recesses or cut-outs 54 that are open-ended longitudinally. The cut-outs 54 accommodate respective sets 38 of cables 14 to avoid pinching and damaging the cables 14. Between the cut-outs 54, the spacer 24 extends inwardly to bear against the outer surface of the pipe 12. Here, the apertures 40 that penetrate the substrate 36 can accommodate and allow that part of the spacer 24 to contact the pipe 12.

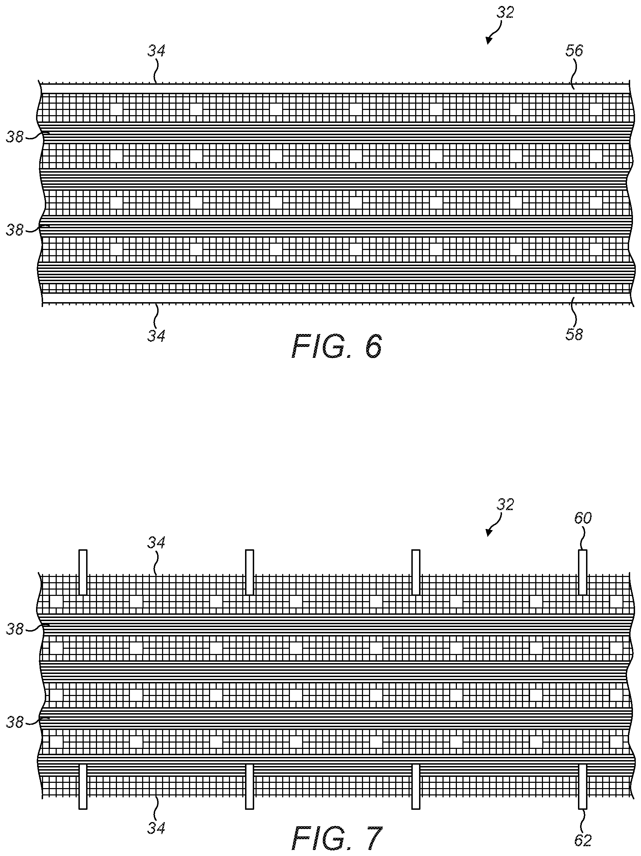

Finally, Figures 6 and 7 show variants in which the mat 32 has self-fastening arrangements. In the example shown in Figure 6, the width of the mat slightly exceeds the circumference of a pipe to which the mat 32 is intended to be secured. Thus, the longitudinal edges 34 of the mat 32 will overlap when the mat 32 is wrapped around the pipe. This overlap brings together, and hence inter-engages, opposed longitudinal fastener strips 56, 58 that are positioned just inboard of the respective longitudinal edges 34, one strip 56 comprising hook formations and the other strip 58 comprising complementary loop formations. The fastener strips 56, 58 may be continuous as shown or may be interrupted longitudinally, for example to define a series of separate tabs.

In the example shown in Figure 7, the mat 32 has arrays of longitudinally-spaced fastener straps 60, 62 that extend outwardly in the widthwise direction from inner ends inboard of the respective longitudinal edges 34 to terminate at outer ends outboard of the respective longitudinal edges 34. The fastener straps 60 comprise hook formations whereas the fastener straps 62 comprise complementary loop formations. Each fastener strap 60 on one edge 34 is in alignment with an opposed fastener strap 62 on the other edge 34, those opposed fastener straps 60, 62 thereby forming a complementary pair that will inter-engage when brought together.

It will be apparent that the fastener strap 60 of a pair on one edge 34 will overlap and hence engage with the counterpart fastener strap 62 of the pair on the other edge 34 when the mat 32 is wrapped around a pipe. It will also be apparent that the fastener straps 60, 62 can be used to secure the mat 32 to a pipe whether the width of the mat 32 is substantially the same as, less than or greater than the circumference of that pipe. In other words, the longitudinal edges 34 of the mat 32 need not overlap but could instead abut or could even be spaced apart circumferentially.

Many variations are possible within the inventive concept. For example, an outer pipe or other outer shell could be fabricated around an assembly of the inner pipe and the mat, that assembly also comprising any additional fastenings, insulation or spacers.

The cables could lie on the outer or upper side of the substrate of the mat, hence sandwiching the substrate between the cables and the underlying pipe. Alternatively, the cables could lie on the inner or lower side of the substrate, instead resulting in the cables being sandwiched between the substrate and the underlying pipe. In another approach, the cables could be incorporated among filaments or other elements of the substrate so that the cables and the substrate lie in a substantially common plane or, when wrapped around a pipe, on a substantially common radius.

In principle, the mat could be made at the same manufacturing facility that eventually applies the mat to a pipe. In that case, the mat could be made continuously at an upstream location in the facility while a downstream end of the mat is being applied to the pipe at a downstream location in the same facility.
upstream location in the facility while a downstream end of the mat is being applied to the pipe at a downstream location in the same facility.

## Claims

1. A method of attaching a plurality of cables (14) to an elongate inner pipe (12) of a pipe-in-pipe system, the method comprising:
bringing together the inner pipe (12) and an elongate mat (32) along a common longitudinal direction, the mat (32) comprising at least two longitudinally-extending cables (14) that are supported by a pliant substrate (36);
wrapping the mat (32) around at least a majority of the circumference of the inner pipe (12) to position the cables (14) at respective angular positions about a longitudinal axis (20) of the inner pipe (12);
fixing the wrapped mat (32) to the inner pipe (12); and
subsequently inserting the inner pipe (12) and the wrapped mat (32) together into an outer pipe (30) of the pipe-in-pipe system.

2. The method of Claim 1, wherein bringing together the inner pipe (12) and the mat (32) and wrapping the mat (32) around the inner pipe (12) are performed simultaneously and continuously.

3. The method of Claim 1 or Claim 2, comprising adding centraliser spacers (24) around the wrapped mat (32) upstream of the outer pipe (30).

4. The method of Claim 3, comprising adding thermal insulation (26) around the wrapped mat (32) between the spacers (24) upstream of the outer pipe (30).

5. The method of Claim 3 or Claim 4, comprising aligning the spacers (24) with cut-outs (40) in the mat (32) to effect direct contact between the spacers (24) and the inner pipe (12) through the cut-outs (40).

6. The method of any of Claims 3 to 5, comprising accommodating the cables (14) in respective recesses (54) on an inner side of each spacer (24).

7. The method of any preceding claim, comprising unspooling a portion of the mat (32) from a reel (42) and advancing that portion of the mat (32) from the reel (42) toward the inner pipe (12).

8. The method of Claim 7, comprising guiding the unspooled portion of the mat (32) from a planar configuration on exiting the reel (42) into a configuration that is curved about the longitudinal axis (20) of the inner pipe (12).

9. The method of Claim 8, comprising funnelling the unspooled portion of the mat (32) from the reel (42) to the inner pipe (12).

10. The method of any of Claims 7 to 9, comprising effecting relative longitudinal movement between the inner pipe (12) and an axis of rotation (44) of the reel (42).

11. The method of Claim 10, wherein: the axis of rotation (44) moves longitudinally as the inner pipe (12) remains static; or the axis of rotation (44) remains static as the inner pipe (12) moves longitudinally.

12. The method of any preceding claim, comprising converging the mat (32) with the inner pipe (12) from above the inner pipe (12).

13. The method of any preceding claim, comprising fixing the wrapped mat (32) to the inner pipe (12) using at least one circumferential band, strap or layer.

14. The method of any preceding claim, comprising fixing the wrapped mat (32) to the inner pipe (12) by inter-engaging complementary fastenings (60, 62) carried by the mat (32).

15. The method of Claim 14, wherein the fastenings (60, 62) are disposed along opposed longitudinal edges (34) of the substrate (36) and inter-engage when those edges (34) overlap, abut or otherwise face each other upon wrapping the mat (32) around the inner pipe (12).

16. A pipe-in-pipe system comprising an inner pipe (12) wrapped with an elongate mat (32) and an outer pipe (30) that surrounds the inner pipe (12) and the mat (32), wherein the inner pipe (12) and the mat (32) extend along a common longitudinal direction, the mat (32) comprises at least two longitudinally-extending cables (14) that are supported by a pliant substrate (36), and the mat (32) is wrapped around at least a majority of the circumference of the inner pipe (12) and is fixed to the inner pipe (12) to position the cables (14) at respective angular positions about a longitudinal axis (20) of the inner pipe (12).

17. The system of Claim 16, wherein the cables (14) are disposed on an inner or outer side of the substrate (36) with respect to the inner pipe (12).

18. The system of Claim 16 or Claim 17, further comprising centraliser spacers (24) surrounding the mat (32) and the inner pipe (12).

19. The system of Claim 18, wherein each spacer (24) has recesses (54) on an inner side that accommodate the cables (14).

20. The system of Claim 19, wherein:
the substrate (36) of the mat (32) is penetrated by a matrix of cut-out apertures (40), the apertures (40) being spaced longitudinally in rows extending parallel to the longitudinal axis (20) between the cables (14) and spaced widthwise in columns extending orthogonally to the longitudinal axis (20);
the spacers (24) are aligned with respective columns of apertures (40) in the substrate (36); and
the recesses (54) are disposed between the apertures (40).

## Patentansprüche

1. Verfahren zum Anbringen einer Vielzahl von Kabeln (14) an einem langgestreckten Innenrohr (12) eines Rohr-in-Rohr-Systems, wobei das Verfahren Folgendes umfasst:
Zusammenbringen des Innenrohrs (12) und einer langgestreckten Matte (32) entlang einer gemeinsamen Längsrichtung, wobei die Matte (32) mindestens zwei sich längs erstreckende Kabel (14) umfasst, die von einem biegsamen Trägermaterial (36) getragen werden;
Wickeln der Matte (32) um mindestens einen Großteil des Umfangs des Innenrohrs (12), um die Kabel (14) an jeweiligen Winkelpositionen um eine Längsachse (20) des Innenrohrs (12) zu positionieren;
Befestigen der gewickelten Matte (32) an dem Innenrohr (12); und
anschließende Einführen des Innenrohrs (12) und der gewickelten Matte (32) zusammen in ein Außenrohr (30) des Rohr-in-Rohr-Systems.

2. Verfahren nach Anspruch 1, wobei das Zusammenbringen des Innenrohrs (12) und der Matte (32) und das Wickeln der Matte (32) um das Innenrohr (12) gleichzeitig und kontinuierlich ausgeführt werden.

3. Verfahren nach Anspruch 1 oder Anspruch 2, umfassend das Hinzufügen von Zentrierungsabstandhaltern (24) um die gewickelte Matte (32) vor dem Außenrohr (30).

4. Verfahren nach Anspruch 3, umfassend das Hinzufügen von Wärmedämmung (26) um die gewickelte Matte (32) zwischen den Abstandhaltern (24) vor dem Außenrohr (30).

5. Verfahren nach Anspruch 3 oder Anspruch 4, umfassend das Ausrichten der Abstandhalter (24) auf Ausschnitte (40) in der Matte (32), um direkten Kontakt zwischen den Abstandhaltern (24) und dem Innenrohr (12) durch die Ausschnitte (40) hindurch zu bewirken.

6. Verfahren nach einem der Ansprüche 3 bis 5, umfassend das Unterbringen der Kabel (14) in jeweiligen Aussparungen (54) auf einer Innenseite jedes Abstandhalters (24).

7. Verfahren nach einem der vorangehenden Ansprüche, umfassend das Abwickeln eines Abschnitts der Matte (32) von einer Rolle (42) und Voranbewegen dieses Abschnitts der Matte (32) von der Rolle (42) in Richtung des Innenrohrs (12).

8. Verfahren nach Anspruch 7, umfassend das Führen des abgewickelten Abschnitts der Matte (32) aus einer ebenen Konfiguration beim Verlassen der Rolle (42) in eine Konfiguration, die um die Längsachse (20) des Innenrohrs (12) gekrümmt ist.

9. Verfahren nach Anspruch 8, umfassend das Aufschieben des abgewickelten Abschnitts der Matte (32) von der Rolle (42) auf das Innenrohr (12).

10. Verfahren nach einem der Ansprüche 7 bis 9, umfassend das Bewirken von relativer Längsbewegung zwischen dem Innenrohr (12) und einer Drehachse (44) der Rolle (42).

11. Verfahren nach Anspruch 10, wobei: sich die Drehachse (44) längs bewegt, während das Innenrohr (12) unbewegt bleibt; oder die Drehachse (44) unbewegt bleibt, während sich das Innenrohr (12) längs bewegt.

12. Verfahren nach einem der vorangehenden Ansprüche, umfassend das Annähern der Matte (32) an das Innenrohr (12) von oberhalb des Innenrohrs (12).

13. Verfahren nach einem der vorangehenden Ansprüche, umfassend das Befestigen der gewickelten Matte (32) an dem Innenrohr (12) unter Verwendung mindestens eines umlaufenden Bands, mindestens eines umlaufenden Riemens oder mindestens einer umlaufenden Schicht.

14. Verfahren nach einem der vorangehenden Ansprüche, umfassend das Befestigen der gewickelten Matte (32) an dem Innenrohr (12) durch Ineingriffbringen von von der Matte (32) getragenen komplementären Befestigungselementen (60, 62) miteinander.

15. Verfahren nach Anspruch 14, wobei die Befestigungselemente (60, 62) entlang entgegengesetzter Längskanten (34) des Trägermaterials (36) angeordnet sind und ineinander eingreifen, wenn sich diese Kanten (34) beim Wickeln der Matte (32) um das Innenrohr (12) überlagern, aneinander anstoßen oder anderweitig einander zugewandt sind.

16. Rohr-in-Rohr-System, umfassend ein mit einer langgestreckten Matte (32) umwickeltes Innenrohr (12) und ein Außenrohr (30), das das Innenrohr (12) und die Matte (32) umgibt, wobei sich das Innenrohr (12) und die Matte (32) entlang eine gemeinsamen Längsrichtung erstrecken, die Matte (32) mindestens zwei sich längs erstreckende Kabel (14) umfasst, die von einem biegsamen Trägermaterial (36) getragen werden, und die Matte (32) um mindestens einen Großteil des Umfangs des Innenrohrs (12) gewickelt ist und an dem Innenrohr (12) befestigt ist, um die Kabel (14) an jeweiligen Winkelpositionen um eine Längsachse (20) des Innenrohrs (12) zu positionieren.

17. System nach Anspruch 16, wobei die Kabel (14) in Bezug auf das Innenrohr (12) auf einer Innen- oder einer Außenseite des Trägermaterials (36) angeordnet sind.

18. System nach Anspruch 16 oder Anspruch 17, ferner umfassend Zentrierungsabstandhalter (24), die die Matte (32) und das Innenrohr (12) umgeben.

19. System nach Anspruch 18, wobei die Abstandhalter (24) jeweils Aussparungen (54) auf einer Innenseite aufweisen, die die Kabel (14) unterbringen.

20. System nach Anspruch 19, wobei:
das Trägermaterial (36) der Matte (32) von einer Matrix von ausgeschnittenen Öffnungen (40) durchdrungen ist, wobei die Öffnungen (40) längs in sich parallel zu der Längsachse (20) zwischen den Kabeln (14) erstreckenden Reihen beabstandet angeordnet sind, und in Breitenrichtung in sich rechtwinklig zu der Längsachse (20) erstreckenden Spalten beabstandet angeordnet sind;
die Abstandhalter (24) auf jeweilige Spalten von Öffnungen (40) in dem Trägermaterial (36) ausgerichtet sind; und
die Aussparungen (54) zwischen den Öffnungen (40) angeordnet sind.

## Revendications

1. Procédé de fixation d'une pluralité de câbles (14) à une conduite intérieure allongée (12) d'un système à double enveloppe, le procédé comprenant :
unir la conduite intérieure (12) et un tapis allongé (32) le long d'une direction longitudinale commune, le tapis (32) comprenant au moins deux câbles s'étendant longitudinalement (14) qui sont supportés par un substrat souple (36) ;
enrouler le tapis (32) autour de la plus grande partie, au moins, de la circonférence de la conduite intérieure (12) afin de placer les câbles (14) dans des positions angulaires respectives autour d'un axe longitudinal (20) de la conduite intérieure (12) ;
assujettir le tapis enroulé (32) à la conduite intérieure (12) ; et
insérer postérieurement la conduite intérieure (12) et le tapis enroulé (32) conjointement dans une conduite extérieure (30) du système à double enveloppe.

2. Procédé selon la revendication 1, dans lequel l'union de la conduite intérieure (12) et du tapis (32) et l'enroulement du tapis (32) autour de la conduite intérieure (12) sont accomplis simultanément et continuellement.

3. Procédé selon la revendication 1 ou la revendication 2, comprenant l'ajout d'entretoises de centrage (24) autour du tapis enroulé (32) en amont de la conduite extérieure (30).

4. Procédé selon la revendication 3, comprenant l'ajout d'une isolation thermique (26) autour du tapis enroulé (32) entre les entretoises (24) en amont de la conduite extérieure (30).

5. Procédé selon la revendication 3 ou la revendication 4, comprenant l'alignement des entretoises (24) avec des ouvertures (40) dans le tapis (32) afin d'établir un contact direct entre les entretoises (24) et la conduite intérieure (12) à travers les ouvertures (40).

6. Procédé selon l'une quelconque des revendications 3 à 5, comprenant la disposition des câbles (14) dans des renfoncements (54) respectifs sur un côté intérieur de chaque entretoise (24).

7. Procédé selon l'une quelconque des revendications précédentes, comprenant le débobinage d'une partie du tapis (32) à partir d'une bobine (42) et l'acheminement de cette partie du tapis (32) depuis la bobine (42) en direction de la conduite intérieure (12).

8. Procédé selon la revendication 7, comprenant le guidage de la partie débobinée du tapis (32) d'une configuration plane lorsqu'elle quitte la bobine (42) à une configuration qui est incurvée autour de l'axe longitudinal (20) de la conduite intérieure (12).

9. Procédé selon la revendication 8, comprenant le conformage en entonnoir de la partie débobinée du tapis (32) acheminée de la bobine (42) à la conduite intérieure (12).

10. Procédé selon l'une quelconque des revendications 7 à 9, comprenant la production d'un mouvement longitudinal relatif entre la conduite intérieure (12) et un axe de rotation (44) de la bobine (42).

11. Procédé selon la revendication 10, dans lequel : l'axe de rotation (44) se déplace longitudinalement tandis que la conduite intérieure (12) reste immobile ; ou l'axe de rotation (44) reste immobile tandis que la conduite intérieure (12) se déplace longitudinalement.

12. Procédé selon l'une quelconque des revendications précédentes, comprenant l'acheminement du tapis (32) de façon à l'approcher de la conduite intérieure (12) depuis un emplacement au-dessus de la conduite intérieure (12).

13. Procédé selon l'une quelconque des revendications précédentes, comprenant l'assujettissement du tapis enroulé (32) à la conduite intérieure (12) au moyen d'au moins une bande, sangle ou couche circonférentielle.

14. Procédé selon l'une quelconque des revendications précédentes, comprenant l'assujettissement du tapis enroulé (32) à la conduite intérieure (12) par la mise en prise mutuelle d'attaches complémentaires (60, 62) présentes sur le tapis (32).

15. Procédé selon la revendication 14, dans lequel les attaches (60, 62) sont disposées le long de bords longitudinaux opposés (34) du substrat (36) et entrent mutuellement en prise lorsque ces bords (34) sont superposés, accolés ou se trouvent autrement en regard l'un de l'autre lors de l'enroulement du tapis (32) autour de la conduite intérieure (12).

16. Système à double enveloppe comprenant une conduite intérieure (12) sur laquelle est enroulé un tapis allongé (32) et une conduite extérieure (30) qui entoure la conduite intérieure (12) et le tapis (32), dans lequel la conduite intérieure (12) et le tapis (32) s'étendent le long d'une direction longitudinale commune, le tapis (32) comprend au moins deux câbles s'étendant longitudinalement (14) qui sont supportés par un substrat souple (36), et le tapis (32) est enroulé autour de la plus grande partie, au moins, de la circonférence de la conduite intérieure (12) et est assujetti à la conduite intérieure (12) afin de placer les câbles (14) dans des positions angulaires respectives autour d'un axe longitudinal (20) de la conduite intérieure (12).

17. Système selon la revendication 16, dans lequel les câbles (14) sont disposés sur un côté intérieur ou extérieur du substrat (36) relativement à la conduite intérieure (12).

18. Système selon la revendication 16 ou la revendication 17, comprenant, en outre, des entretoises de centrage (24) entourant le tapis (32) et la conduite intérieure (12).

19. Système selon la revendication 18, dans lequel chaque entretoise (24) comporte sur un côté intérieur des renfoncements (54) dans lesquels sont disposés les câbles (14).

20. Système selon la revendication 19, dans lequel :
le substrat (36) du tapis (32) est traversé par une grille d'ouvertures (40), les ouvertures (40) étant espacées longitudinalement en lignes s'étendant parallèlement à l'axe longitudinal (20) entre les câbles (14) et espacées dans le sens de la largeur en colonnes s'étendant orthogonalement à l'axe longitudinal (20) ;
les entretoises (24) sont alignées avec des colonnes respectives d'ouvertures (40) dans le substrat (36) ; et
les renfoncements (54) sont disposés entre les ouvertures (40).
